# FASCICULE DE BREVET EUROPEEN

(11) **EP 2 162 359 B1**
(45) Date de publication et mention de la délivrance du brevet: **21.12.2011**
(21) Numéro de dépôt: 08787871.6
(22) Date de dépôt: 28.03.2008
(51) Int. Cl.: B64D 33/04, B64D 29/00, B64D 29/08

(54) **ENSEMBLE ARRIÈRE DE NACELLE POUR TURBORÉACTEUR**
GONDELRÜCKSEITENBAUGRUPPE FÜR EINEN TURBOSTRAHLMOTOR
NACELLE REAR ASSEMBLY FOR TURBOJET ENGINE

(30) Priorité: 22.05.2007 FR 0703607
(43) Date de publication de la demande: 17.03.2010
(73) Titulaire: Aircelle, 76700 Gonfreville l'Orcher (FR)
(72) Inventeur: CARUEL, Pierre, F-76600 Le Havre (FR)
(74) Mandataire: Gaillarde, Frédéric F. Ch.
(86) Numéro de dépôt international: PCT/FR2008/000431
(87) Numéro de publication internationale: WO 2008/142242

(56) Documents cités:
- EP-A- 0 361 901
- EP-A- 1 515 006
- FR-A- 2 291 091
- FR-A- 2 772 342
- GB-A- 2 274 490
- GB-A- 2 288 578
- US-A- 5 228 641

## Description

La présente invention se rapporte à un ensemble arrière de nacelle pour moteur à réaction, et à une nacelle équipée d'un tel ensemble.

Un avion est mû par un ou plusieurs turboréacteurs logés chacun dans une nacelle.

Une nacelle présente généralement une structure tubulaire comprenant une entrée d'air en amont du turboréacteur, un ensemble intermédiaire destiné à entourer une soufflante du turboréacteur, un ensemble arrière pouvant intégrer des moyens d'inversion de poussée et destiné à entourer la chambre de combustion et tout ou partie des étages de compresseur et de turbine du turboréacteur, et est généralement terminée par une tuyère d'éjection dont la sortie est située en aval du turboréacteur.

Les nacelles modernes sont destinées à abriter un turboréacteur double flux apte à engendrer d'une part un flux d'air chaud (également appelé flux primaire) issu de la chambre de combustion du turboréacteur, et d'autre part un flux d'air froid (flux secondaire) issu de la soufflante et circulant à l'extérieur du turboréacteur à travers un passage annulaire, également appelé veine, formé entre une structure interne définissant un carénage du turboréacteur et une paroi interne de la nacelle. Les deux flux d'air sont éjectés du turboréacteur par l'arrière de la nacelle.

Les moyens d'inversion de poussée permettent, lors de l'atterrissage d'un avion, d'améliorer la capacité de freinage de celui-ci en redirigeant vers l'avant au moins une partie de la poussée engendrée par le turboréacteur. Dans cette phase, l'inverseur obstrue généralement la veine du flux froid et dirige ce dernier vers l'avant de la nacelle, engendrant de ce fait une contre-poussée qui vient s'ajouter au freinage des roues de l'avion.

Les moyens mis en oeuvre pour réaliser cette réorientation du flux froid varient suivant le type d'inverseur.

On connaît de la technique antérieure un ensemble arrière de nacelle pour turboréacteur, comprenant :
- un capot,
- une structure interne en forme de fuseau dont au moins la partie aval est du type O-duct et est mobile par coulissement axial entre une position de fonctionnement dans laquelle elle recouvre le générateur de gaz dudit turboréacteur et définit une veine annulaire d'air froid avec ledit capot, et une position de maintenance située en aval de ladite position de fonctionnement.

L'expression « en fuseau » signifie que la structure interne présente une zone centrale de plus fort diamètre que ses extrémités amont et aval.

L'expression « O-duct », couramment utilisée dans le domaine des nacelles pour avion, signifie que l'organe concerné (en l'occurrence, la partie aval de la structure interne) s'étend sur pratiquement toute la circonférence du générateur de gaz de l'avion.

Cette expression est utilisée par opposition à « C-duct », désignant un organe qui ne s'étend que sur la moitié de la circonférence du générateur de gaz (on parle dans ce cas également d'organe en « demi-coquille »).

Par définition, un organe en « O-duct » ne peut permettre un accès au générateur de gaz que par coulissement axial.

En pratique, une structure interne en « O-duct » vient buter sur le générateur de gaz de l'avion lors de son coulissement de sa position de fonctionnement vers sa position de maintenance : le déplacement aval de la structure interne est donc limité, de sorte qu'il n'est possible d'accéder à certains organes du générateur de gaz qu'en prévoyant des trappes d'accès sur cet organe.

La présente invention a ainsi notamment pour but de fournir un ensemble arrière de nacelle du type susmentionné permettant de faciliter l'accès au turboréacteur.

On atteint ce but de l'invention avec un ensemble arrière de nacelle pour turboréacteur, comprenant :
- un capot,
- une structure interne en forme de fuseau dont au moins la partie aval est du type O-duct et est mobile par coulissement axial entre une position de fonctionnement dans laquelle elle recouvre le générateur de gaz dudit turboréacteur et définit une veine annulaire d'air froid avec ledit capot, et une position de maintenance située en aval de ladite position de fonctionnement, la partie amont de ladite structure interne étant séparable de ladite partie aval et comportant au moins deux portes aptes à s'ouvrir vers l'extérieur,
cet ensemble étant remarquable en ce que le diamètre intérieur du bord amont de ladite partie aval est supérieur au plus grand diamètre dudit générateur de gaz, de manière que cette partie aval puisse coulisser sans blocage par rapport à ce générateur de gaz.

Comme on peut le comprendre, un tel ensemble permet de séparer la partie amont de la structure interne de la partie aval, et de faire coulisser cette partie aval sans blocage par rapport au carter de turbine basse pression du générateur de gaz notamment.

On peut donc s'affranchir de la sorte de la contrainte de butée de la partie amont sur le générateur de gaz due au trop faible diamètre de cette partie amont.

Tandis que l'accès à la partie aval du générateur de gaz est obtenu par coulissement de la partie aval de la structure interne, l'accès à la partie amont du générateur de gaz est obtenu par ouverture vers l'extérieur des portes de la partie amont de la structure interne.

Suivant d'autres caractéristiques optionnelles de l'ensemble arrière de nacelle selon l'invention :
- lesdites portes sont ouvrables par pivotement autour d'axes sensiblement parallèles à la direction dudit coulissement : la mise en oeuvre d'un tel mode d'ouverture est très simple techniquement ;
- lesdites portes sont en outre mobiles par coulissement axial : ceci permet, une fois réalisée l'ouverture des portes, de déplacer celles-ci vers l'aval du générateur de gaz, dans les cas où leur ouverture ne serait pas suffisante pour permettre l'accès à la zone amont du générateur de gaz (voir notamment ci-après le cas où un cadre avant recouvre les portes) ;
- cet ensemble comprend des moyens périphériques de liaison desdites portes à ladite partie aval du type à rainure et à couteau : de tels moyens de liaison garantissent la robustesse et l'étanchéité de cette liaison, et permettent d'éviter tout mouvement axial intempestif de la partie aval de la structure interne tant que les portes de la partie amont n'ont pas été ouvertes ;
- dans leur zone de fermeture bord à bord, lesdites portes présentent un décalage axial, au moins un premier verrou étant interposé dans la zone de bords jointifs desdites portes, et au moins un deuxième verrou étant interposé dans la zone où le bord d'une desdites portes est jointif avec le bord de ladite partie aval de structure interne : un tel décalage axial permet d'empêcher le verrouillage des deux portes tant que la partie aval de la structure interne n'a pas été replacée dans sa position de fonctionnement ;
- dans leur zone de fermeture bord à bord, lesdites portes présentent une encoche apte à recevoir une excroissance de ladite partie aval de structure interne, au moins des premier et deuxième verrous étant interposés entre lesdites portes et ladite excroissance : le rôle de cette encoche et de cette excroissance est comparable à celui du décalage susmentionné ;
- lorsque ledit capot est lui-même monté coulissant axialement entre une position de fonctionnement et une position de maintenance située en aval de ladite position de fonctionnement, cet ensemble comprend des verrous de liaison entre lesdites portes dont les poignées d'actionnement sont suffisamment longues pour bloquer le retour dudit capot de sa position de maintenance vers sa position de fonctionnement tant que ces poignées ne sont pas rabattues en position de verrouillage : ceci permet de se prémunir contre la fermeture du capot alors que les deux portes ne seraient pas correctement verrouillées ;
- cet ensemble comprend un cadre avant apte à être relié au carter de soufflante dudit turboréacteur, ce cadre avant recouvrant au moins partiellement lesdites portes lorsque ladite structure interne se trouve en position de fonctionnement ;
- ledit cadre avant est structurant pour ladite nacelle ;
- cet ensemble comprend des moyens d'inversion de poussée ;
- lesdits moyens d'inversion de poussée comprennent des volets montés pivotant sur ledit capot, et des bielles interposées entre ces volets et ladite partie aval de structure interne de manière qu'une translation vers l'aval dudit capot provoque l'obturation de ladite veine d'air froid par ces volets, et la déviation du flux d'air froid vers l'extérieur de la nacelle.

La présente invention se rapporte également à une nacelle d'avion, remarquable en ce qu'elle est équipée d'un ensemble conforme à ce qui précède.

D'autres caractéristiques et avantages de la présente invention apparaîtront à la lumière de la description qui va suivre, et à l'examen des figures ci-annexées dans lesquelles :
- la figure 1 représente en perspective un turboréacteur sur lequel est monté un ensemble arrière de nacelle conforme à l'invention, le capot de cet ensemble arrière ayant été ôté à des fins explicatives,
- la figure 2 est une vue en coupe axiale, prise selon le plan P de la figure 1, d'une partie de la zone comprise entre la structure interne et le capot de l'ensemble arrière de nacelle selon la figure 1,
- la figure 3 est une vue analogue à la figure 1, les deux portes de la partie amont de la structure interne de l'ensemble arrière de nacelle étant représentées en position ouverte,
- la figure 4 est une vue analogue à la figure 3, la partie aval de la structure interne étant représentée en position de maintenance,
- la figure 5 est une vue axiale de la partie amont de la structure interne telle que représentée à la figure 4, la partie aval étant omise pour des raisons de clarté,
- la figure 6 est une vue analogue aux figures 3 et 4, les deux portes de la partie amont de la structure interne ainsi que la partie aval de cette structure interne ayant coulissé vers l'aval du turboréacteur,
- la figure 7 est une vue de dessous de la structure interne de l'ensemble arrière de nacelle selon l'invention, les deux portes et la partie aval de cette structure interne étant représentées en position verrouillée,
- la figure 8 est une vue analogue à celle de la figure 7 d'une variante de la zone de liaison des deux portes et de la partie aval de la structure interne,
- la figure 9 est une vue analogue à celle de la figure 4, le capot de l'ensemble arrière de nacelle selon l'invention étant représenté en position de maintenance,
- la figure 10 est une vue analogue à celle de la figure 9, ledit capot étant représenté en position de butée sur des verrous des portes de ladite structure interne,
- la figure 11 est une vue analogue à celle de la figure 2, les moyens d'inversion de poussée étant représentés en position active, et
- la figure 12 est une vue analogue à celle de la figure 11, les moyens d'inversion de poussée et la partie aval de la structure interne étant représentés en position de maintenance.

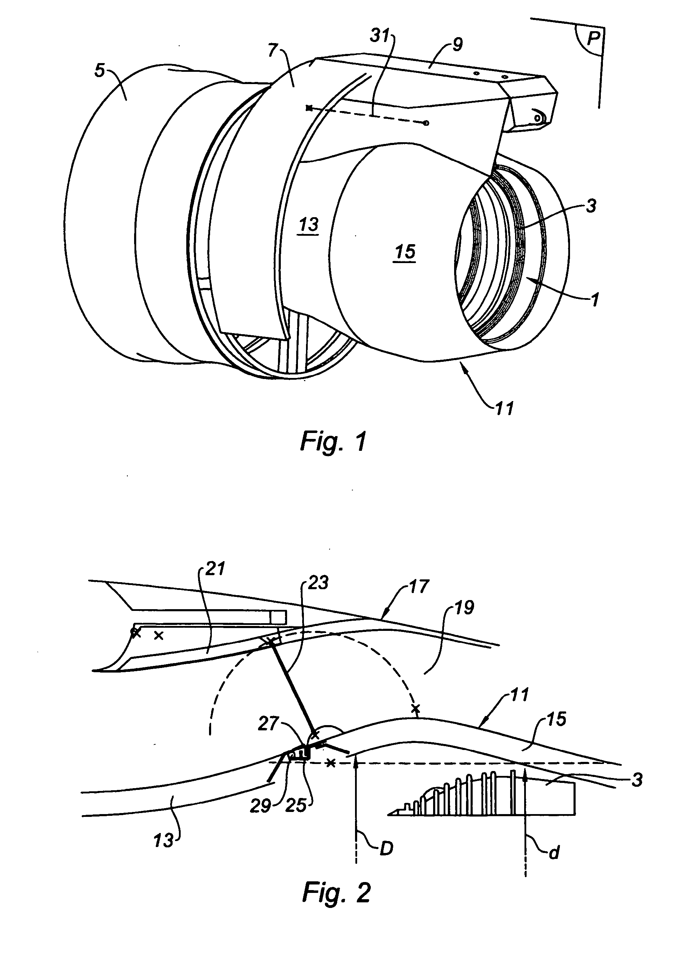

On se reporte à présent aux figures 1 et 2, sur lesquelles on a représenté un turboréacteur 1 pour avion, comprenant notamment un générateur de gaz 3 et, en amont de celui-ci, une soufflante dont on peut voir le carter 5.

Un cadre avant 7, fixé en aval du carter de soufflante 5, permet de relier le moteur 1 à un pylône 9 destiné à être fixé sous une aile d'avion.

Dans cette configuration particulière, on dit que le cadre avant 7 est structurant, c'est-à-dire qu'il permet de supporter le poids de l'ensemble du turboréacteur 1, ainsi que les efforts de poussée et de contre-poussée engendrés par ce turboréacteur.

Il faut bien comprendre que la présente invention n'est nullement limitée à la présence d'un tel cadre avant structurant, et que tout moyen de fixation classique du turboréacteur 1 au pylône 9 entre également dans le cadre de la présente invention.

Une structure interne 11 de nacelle, comprenant une partie amont 13 et une partie aval 15, forme un carénage pour le générateur de gaz 3 et est reliée au pylône 9 par des moyens autorisant une cinématique appropriée qui sera décrite plus loin.

La structure interne 11 définit, avec un capot 17, une veine annulaire d'air froid 19, apte à permettre la circulation d'air froid engendré par la soufflante vers l'aval de la nacelle.

Dans le cas particulier représenté à la figure 2, le capot 17 comprend des moyens d'inversion de poussée, comportant typiquement une pluralité de volets 21 susceptibles d'être actionnés par des bielles 23 lors du coulissement du capot 17 par rapport à la structure interne 11.

Comme cela apparaît de manière particulièrement claire sur la figure 2, les bords jointifs de la partie amont 13 et de la partie aval 15 de la structure interne 11, comprennent des moyens complémentaires de liaison du type à gorge 25 et à couteau 27, ainsi qu'au moins un joint d'étanchéité 29.

Ces moyens de liaison 25, 27, bloquent axialement les parties amont 13 et aval 15, l'une par rapport à l'autre.

De manière avantageuse, la partie aval 15 est montée coulissante sur le pylône 9 grâce à des moyens de rail et de glissière représentés de manière symbolique par le trait en pointillés 31 visible sur la figure 1.

Ces moyens de rail et de glissière 31 peuvent éventuellement permettre également le coulissement de la partie amont 13 de la structure interne 11 une fois ouverte.

Cette partie amont 13 comporte en fait deux demi-portes 13a, 13b aptes à s'ouvrir vers l'extérieur, c'est-à-dire en s'éloignant du générateur de gaz 3, par pivotement autour d'axes respectifs disposés de manière sensiblement parallèle aux moyens de rail et de glissière 31.

Cette structure particulière de la partie amont 13 diffère de celle de la partie avale 15, cette dernière étant du type «O-DUCT» tel que défini dans le préambule de la description, c'est-à-dire s'étendant sur pratiquement toute la circonférence du générateur de gaz 3.

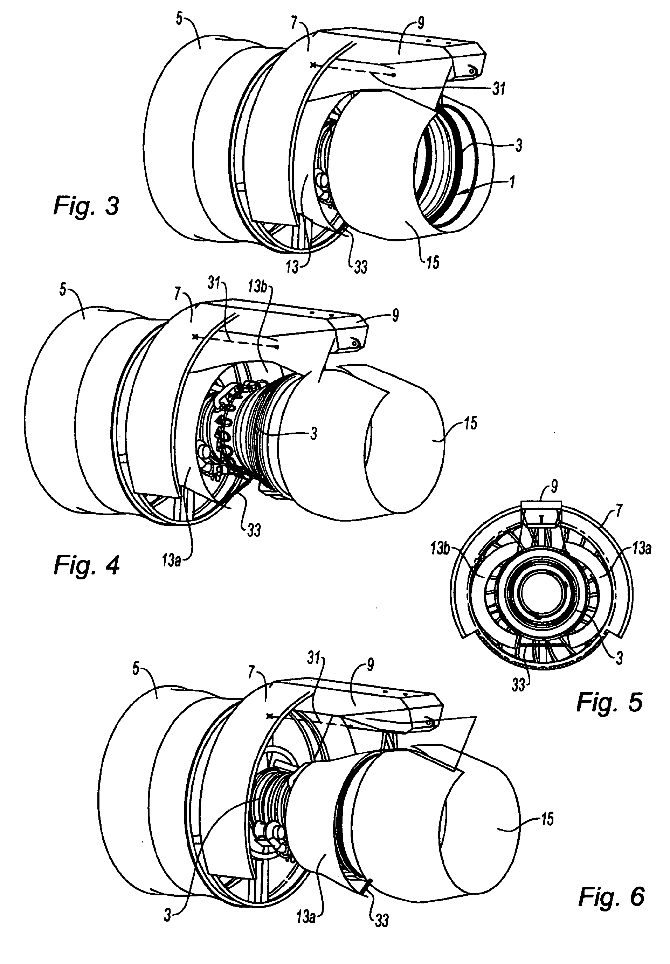

Les figures 3 à 6 indiquent la cinématique d'ouverture de la structure interne 11 en vue d'opération de maintenance à effectuer sur le générateur de gaz 3.

On commence par ouvrir vers l'extérieur les deux portes 13a, 13b de la partie amont 13 de la structure interne 11, comme cela est visible sur la figure 3.

Dans l'exemple représenté, on peut voir que cette ouverture vers l'extérieur est limitée par la présente du cadre avant 7 qui recouvre partiellement ces portes.

Pour maintenir ces portes en position d'ouverture, on peut envisager d'interposer une bielle de maintien 33 s'étendant entre les deux bords inférieurs de ces portes.

L'ouverture des deux portes 13a, 13b, permet de sortir les couteaux 27 de ces ceux portes de la rainure complémentaire 25 formée dans la partie aval 15 de la structure interne 11.

A partir de là, on peut faire coulisser la partie aval 15 en aval du générateur de gaz 3, comme cela est visible sur la figure 4, les deux portes 13a et 13b demeurant en position ouverte, comme cela est visible sur la figure 5.

Dans cette configuration de maintenance, on peut donc accéder facilement à la zone aval du générateur de gaz 3, ainsi qu'à une bonne partie de sa zone amont.

Dans le cas particulier où les deux portes 13a, 13b sont montées coulissantes par rapport au pylône 9, on peut, à partir de la situation représentée sur les figures 4 et 5, faire coulisser ces deux portes ouvertes vers l'aval, comme cela est représenté sur la figure 6, ce qui permet d'accéder à la zone la plus amont du générateur de gaz 3.

On notera, comme cela est particulièrement visible sur la figure 2, que le diamètre intérieur D du bord amont de la partie aval 15 est supérieur au plus grand diamètre du générateur de gaz 3, grâce à quoi cette partie aval 15 peut coulisser sans blocage par rapport au carter de turbine basse pression notamment.

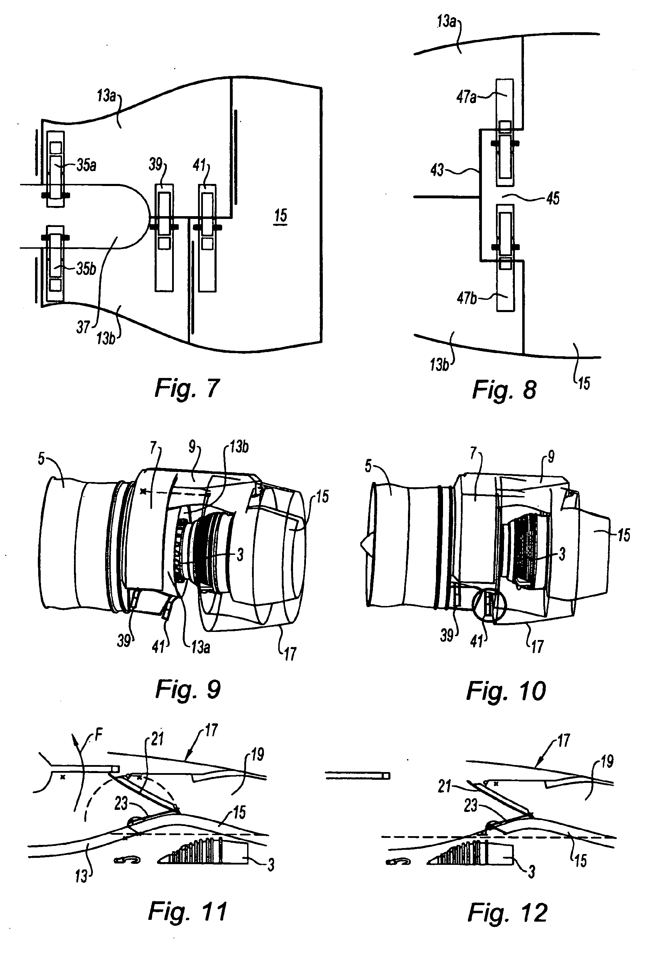

En se reportant à la figure 7, on peut voir que l'on peut prévoir, dans la partie inférieure des deux portes 13a, 13b, deux verrous 35a, 35b, aptes à permettre le verrouillage de ces deux portes sur une partie fixe 37 du moteur (permettant notamment le passage de canalisations du compartiment moteur au compartiment soufflante).

On peut également voir sur la figure 7 que l'on prévoit avantageusement que les deux portes 13a, 13b comportent des parties inférieures dissymétriques, c'est-à-dire en fait que la porte 13a s'étende axialement plus en aval que la porte 13b, la forme de la partie aval 15 étant quant à elle complémentaire de celle définie par les deux portes 13a et 13b.

Un premier verrou 39 est interposé entre la porte 13a et la porte 13b, et un deuxième verrou 41 est interposé entre la porte 13a et la partie aval 15.

Grâce à la disposition particulière du verrou 41, on comprend qu'on ne peut refermer ce verrou qu'à la condition que la partie aval 15 ait été correctement replacée dans sa position de fonctionnement, c'est-à-dire de manière que les couteaux des bords des portes 13a et 13b soient engagés dans la rainure correspondante du bord amont de la partie 15 : ceci permet donc de garantir que la fermeture correcte et complète des deux portes 13a et 13b ne pourra être obtenue qu'à la condition que la partie aval 15 de la structure interne 11 ait été correctement repositionnée.

Dans la variante de la figure 8, on peut voir que la partie inférieure des deux portes 13a, 13b comprend une encoche 43 destinée à coopérer avec une excroissance complémentaire 45 formée sur la partie inférieure du bord amont de la partie aval 15. Deux verrous 47a, 47b, sont interposés respectivement entre la porte 13a et la partie aval 15, et entre la porte 13b et cette partie aval.

On comprend donc que dans ce cas particulier, la fermeture simultanée des deux verrous 47a, 47b, ne peut être obtenue qu'à la condition que l'excroissance 45 soit correctement engagée dans l'encoche 43, c'est-à-dire que la partie aval 15 de la structure interne 11 ait correctement été repositionnée dans sa position de fonctionnement : tant que cette position n'aura pas été atteinte, la fermeture correcte des deux portes 13a, 13b ne pourra être obtenue.

En se reportant aux figures 9 et 10, on peut voir que le capot 17 peut lui-même être monté coulissant sur le pylône 9 entre une position de fonctionnement (non représentée) dans laquelle il recouvre au moins en partie le cadre avant 7, et une position de maintenance (voir figures 9 et 10), dans laquelle ce capot donne accès au générateur de gaz 3.

Comme cela est visible sur les figures 9 et 10, on peut avantageusement prévoir que les verrous 39 et 41 de la figure 7 présentent une extension radiale suffisamment importante pour bloquer le retour du capot 17 vers sa position de fonctionnement tant qu'ils n'ont pas été rabattus et verrouillés à leur position fermée : comme cela est visible sur la figure 10 en particulier, le capot 17 vient buter au moins contre le verrou 41 lorsque ce dernier se trouve en position ouverte, la présence de la structure fixe 37 (voir figure 7) empêchant la poignée du verrou 41 de se tordre ou de rompre.

Ce dispositif particulier de sécurité permet de prévenir tout oubli de verrouillage des portes 13a, 13b, préalablement au repositionnement du capot 17 dans sa position de fonctionnement.

Sur la figure 11, on a représenté les volets d'inversion de poussée 21 en position active, obtenue par coulissement du capot 17 en aval de la structure interne 11, grâce à quoi le flux d'air froid circulant dans la veine19 est dévié vers l'extérieur de la nacelle, comme cela est indiqué par la flèche F.

Sur la figure 12, on peut voir que la configuration de maintenance permettant l'accès au générateur de gaz 3 se déduit de celle visible à la figure 11 par coulissement de concert de la partie aval 15 da la structure internes 11 avec le capot 17 disposé en mode d'inversion de poussée.

Comme on peut le comprendre à la lumière des figures 2, 11 et 12, le fait de prévoir que la partie aval 15 de la structure interne 11 soit montée coulissante par rapport au pylône 9 permet d'envisager l'actionnement des volets 21 par des bielles 23 interposées entre ces volets et la partie aval 15.

Un tel mode d'actionnement, extrêmement simple puisqu'il peut être activé par le seul déplacement relatif du capot 17 par rapport à la partie aval 15, n'est pas envisageable dans d'autres systèmes de la technique antérieure, dans lesquels, par exemple, la structure interne de la nacelle est formée de deux demi-coquilles susceptibles de s'écarter du générateur de gaz par pivotement.

Comme on l'aura compris à la lumière de ce qui précède, le fait de prévoir que la structure interne 11 comporte une partie aval 15 pouvant coulisser et une partie amont comprenant deux portes 13 pouvant s'ouvrir vers l'extérieur, permet de libérer l'accès à toutes les parties du générateur de gaz 3, et ce sans aucun surcroît de poids significatif par rapport aux dispositifs de l'état de la technique.

Bien entendu, la présente invention n'est nullement limitée au mode de réalisation décrit et représenté, fourni à titre de simple exemple.

## Revendications

1. Ensemble arrière de nacelle pour turboréacteur (1), comprenant :
- un capot (17),
- une structure interne (11) en forme de fuseau dont au moins la partie aval (15) est du type O-duct et est mobile par coulissement axial entre une position de fonctionnement dans laquelle elle est apte à recouvrir le générateur de gaz (3) d'un turboréacteur (1) monté et définit une veine annulaire d'air froid (19) avec ledit capot (17), et une position de maintenance située en aval de ladite position de fonctionnement, la partie amont (13) de ladite structure interne (11) étant séparable de ladite partie aval (15) et comportant au moins deux portes (13a, 13b) aptes à s'ouvrir vers l'extérieur,
cet ensemble étant **caractérisé en ce que** le diamètre intérieur (D) du bord amont de ladite partie aval (15) est supérieur au plus grand diamètre dudit générateur de gaz (3), de manière que cette partie aval (15) puisse coulisser sans blocage par rapport à ce générateur de gaz (3).

2. Ensemble selon la revendication 1, **caractérisé en ce que** lesdites portes (13a, 13b) sont ouvrables par pivotement autour d'axes (31) sensiblement parallèles à la direction dudit coulissement.

3. Ensemble selon l'une des revendications 1 ou 2, **caractérisé en ce que** lesdites portes (13a, 13b) sont en outre mobiles par coulissement axial.

4. Ensemble selon l'une quelconque des revendications 1 à 3, **caractérisé en ce qu'**il comprend des moyens périphériques de liaison desdites portes à ladite partie aval du type à rainure (25) et à couteau (27).

5. Ensemble selon l'une quelconque des revendications précédentes, **caractérisé en ce que** dans leur zone de fermeture bord à bord, lesdites portes (13a, 13b) présentent un décalage axial, au moins un premier verrou (39) étant interposé dans la zone de bords jointifs desdites portes, et au moins un deuxième verrou (41) étant interposé dans la zone où le bord d'une desdites portes est jointif avec le bord de ladite partie aval (15) de structure interne.

6. Ensemble selon l'une quelconque des revendications 1 à 4, **caractérisé en ce que** dans leur zone de fermeture bord à bord, lesdites portes (13a, 13b) présentent une encoche (43) apte à recevoir une excroissance (45) de ladite partie aval (15) de structure interne, au moins des premier (47a) et deuxième (47b) verrous étant interposés entre lesdites portes (13a, 13b) et ladite excroissance (45).

7. Ensemble selon l'une quelconque des revendications précédentes, dans lequel ledit capot (17) est lui-même monté coulissant axialement entre une position de fonctionnement et une position de maintenance située en aval de ladite position de fonctionnement, **caractérisé en ce qu'**il comprend des verrous (39, 41) de liaison entre lesdites portes (13a, 13b) dont les poignées d'actionnement sont suffisamment longues pour bloquer le retour dudit capot (17) de sa position de maintenance vers sa position de fonctionnement tant que ces poignées ne sont pas rabattues en position de verrouillage.

8. Ensemble selon l'une quelconque des revendications précédentes, **caractérisé en ce qu'**il comprend un cadre avant (7) apte à être relié au carter (5) de soufflante dudit turboréacteur (1), ce cadre avant (7) recouvrant au moins partiellement lesdites portes (13a, 13b) lorsque ladite structure interne (11) se trouve en position de fonctionnement.

9. Ensemble selon la revendication 8, **caractérisé en ce que** ledit cadre avant (7) est structurant pour ladite nacelle.

10. Ensemble selon l'une quelconque des revendications précédentes, **caractérisé en ce qu'**il comprend des moyens d'inversion de poussée (17, 21, 23).

11. Ensemble selon la revendication 10, **caractérisé en ce que** lesdits moyens d'inversion de poussée comprennent des volets (23) montés pivotants sur ledit capot (17), et des bielles (21) interposées entre ces volets (23) et ladite partie aval (15) de structure interne de manière qu'une translation vers l'aval dudit capot (17) provoque l'obturation de ladite veine d'air froid (19) par ces volets (23), et la déviation du flux d'air froid vers l'extérieur de la nacelle.

12. Nacelle d'avion, **caractérisée en ce qu'**elle est équipée d'un ensemble conforme à l'une quelconque des revendications précédentes.

## Claims

1. A nacelle rear assembly for a turbojet engine (1) comprising:
- a cowl (17),
- a pod-shaped internal structure (11) of which at least the downstream part (15) is of the 0-duct type and is able to move in axial sliding between an operating position in which it covers the gas generator (3) of said turbojet engine (1) and defines an annular cold air flow path (19) with said cowl (17), and a maintenance position situated downstream of said operating position, the upstream part (13) of said internal structure (11) being detachable from said downstream part (15) and comprising at least two doors (13a, 13b) capable of opening outward,
this assembly being **characterized in that** the inside diameter (D) of the upstream edge of said downstream part (15) is greater than the largest diameter of said gas generator (3), so that this downstream part (15) can slide without blockage in relation to this gas generator (3).

2. The assembly as claimed in claim 1, **characterized in that** said doors (13a, 13b) can open by pivoting about axes (31) substantially parallel to the direction of said sliding.

3. The assembly as claimed in one of claims 1 and 2, **characterized in that** said doors (13a, 13b) are also able to move in axial sliding.

4. The assembly as claimed in any one of claims 1 to 3, **characterized in that** it comprises peripheral means of connecting said doors to said downstream part, of the knife edge (27) and groove (25) type.

5. The assembly as claimed in any one of the preceding claims, **characterized in that** in the region where they close edge-to-edge, said doors (13a, 13b) exhibit an axial offset, at least a first catch (39) being interposed in the region of the contiguous edges of said doors, and at least a second catch (41) being interposed in the region where the edge of one of said doors is contiguous with the edge of said downstream part (15) of the internal structure.

6. The assembly as claimed in any one of claims 1 to 4, **characterized in that** in the region where they close edge-to-edge, said doors (13a, 13b) have a cutout (43) capable of housing a protrusion (45) of said downstream part (15) of the internal structure, at least first (47a) and second (47b) catches being interposed between said doors (13a, 13b) and said protrusion (45).

7. The assembly as claimed in any one of the preceding claims, in which said cowl (17) is itself mounted to slide axially between an operating position and a maintenance position situated downstream of said operating position, **characterized in that** it comprises catches (39, 41) providing the connection between said doors (13a, 13b), the actuating handles of which are long enough to block the return of said cowl (17) from its maintenance position to its operating position as long as these handles are not folded down into the locked position.

8. The assembly as claimed in any one of the preceding claims, **characterized in that** it comprises a forward frame (7) able to be connected to the fan casing (5) of said turbojet engine (1), this forward frame (7) at least partially covering said doors (13a, 13b) when said internal structure (11) is in the operating position.

9. The assembly as claimed in claim 8, **characterized in that** said forward frame (7) is structural to said nacelle.

10. The assembly as claimed in any one of the preceding claims, **characterized in that** it comprises thrust reversal means (17, 21, 23).

11. The assembly as claimed in claim 10, **characterized in that** said thrust reversal means comprise shutters (23) pivot-mounted on said cowl (17), and links (21) interposed between these shutters (23) and said downstream part (15) of the internal structure so that a translational movement of said cowl (17) in the downstream direction causes these shutters (23) to close off said cold air flow path (19) and to deflect the cold air stream toward the outside of the nacelle.

12. An airplane nacelle, **characterized in that** it is equipped with an assembly as claimed in any one of the preceding claims.

## Patentansprüche

1. Hintere Gruppe einer Gondel für Turbotriebwerk (1), die umfasst:
- eine Verkleidung (17),
- eine innere spindelförmige Struktur (11), von der mindestens der unterstromige Abschnitt (15) vom Typ O-Duct ist und zwischen einer Funktionsstellung, in der er imstande ist, den Gasgenerator (3) eines montierten Turbotriebwerks (1) zu verkleiden und mit der Verkleidung (17) eine ringförmige Kaltluftader (19) definiert, und einer unterstromigen Wartungsstellung zur Funktionsstellung axial verschiebbar ist, wobei der oberstromige Abschnitt (13) der inneren Struktur (11) vom unterstromigen Abschnitt (15) trennbar ist und mindestens zwei Türen (13a, 13b) aufweist, die sich nach außen öffnen,
wobei diese Gruppe **dadurch gekennzeichnet ist, dass** der Innendurchmesser (D) des oberstromigen Rands des unterstromigen Abschnitts (15) größer ist als der größte Durchmesser des Gasgenerators (3), so dass dieser unterstromige Abschnitt (15) im Verhältnis zu diesem Gasgenerator (3) gleiten kann, ohne zu blockieren.

2. Gruppe nach Anspruch 1, **dadurch gekennzeichnet, dass** die Türen (13a, 13b) durch Schwenken um Achsen (31) etwa parallel zur Gleitrichtung zu öffnen sind.

3. Gruppe nach einem der Ansprüche 1 oder 2, **dadurch gekennzeichnet, dass** die Türen (13a, 13b) weiterhin durch axiales Gleiten bewegbar sind.

4. Gruppe nach einem der Ansprüche 1 bis 3, **dadurch gekennzeichnet, dass** sie periphere Verbindungsmittel der Türen mit dem unterstromigen Abschnitt vom Typ mit Nut (25) und mit Feder (27) umfasst.

5. Gruppe nach einem der vorangehenden Ansprüche, **dadurch gekennzeichnet, dass** die Türen (13a, 13b) in ihrem Rand-an-Rand-Schließbereich einen axialen Versatz aufweisen, wobei mindestens ein erster Riegel (39) im Bereich der verbindenden Ränder der Türen und mindestens ein zweiter Riegel (41) in dem Bereich zwischengestellt ist, wo der Rand einer der Türen am Rand des unterstromigen Abschnitts (15) der inneren Struktur anliegt.

6. Gruppe nach einem der Ansprüche 1 bis 4, **dadurch gekennzeichnet, dass** die Türen (13a, 13b) in ihrem Rand-an-Rand-Schließbereich eine Aussparung (43) aufweisen, die imstande ist, eine Erweiterung (45) des unterstromigen Abschnitts (15) der inneren Struktur aufzunehmen, wobei mindestens der erste (47a) und der zweite (47b) Riegel zwischen den Türen (13a, 13b) und der Erweiterung (45) zwischengestellt sind.

7. Gruppe nach einem der vorangehenden Ansprüche, bei der die Verkleidung (17) selbst axial gleitend zwischen einer Funktionsstellung und einer Wartungsstellung unterstromig zur Funktionsstellung gleitend montiert ist, **dadurch gekennzeichnet, dass** sie Verbindungsriegel (39, 41) zwischen den Türen (13a, 13b) umfasst, deren Bediengriffe ausreichend lang sind, um die Rückkehr der Verkleidung (17) aus ihrer Wartungsstellung in ihre Funktionsstellung zu verhindern, solange diese Griffe nicht in Verriegelungsstellung heruntergeklappt sind.

8. Gruppe nach einem der vorangehenden Ansprüche, **dadurch gekennzeichnet, dass** sie einen vorderen Rahmen (7) umfasst, der imstande ist, mit dem Gebläsegehäuse (5) des Turbotriebwerks (1) verbunden zu sein, wobei der vordere Rahmen (7) die Türen (13a, 13b) mindestens teilweise verkleidet, wenn sich die innere Struktur (11) in Funktionsstellung befindet.

9. Gruppe nach Anspruch 8, **dadurch gekennzeichnet, dass** der vordere Rahmen (7) für die Gondel strukturierend ist.

10. Gruppe nach einem der vorangehenden Ansprüche, **dadurch gekennzeichnet, dass** sie Schubumkehrmittel (17, 21, 23) umfasst.

11. Gruppe nach Anspruch 10, **dadurch gekennzeichnet, dass** die Schubumkehrmittel Klappen (23) umfassen, die derart schwenkbar auf der Verkleidung (17) montiert sind, und Pleuelstangen (21) zwischen diesen Klappen (23) und dem unterstromigen Abschnitt (15) der inneren Struktur, dass eine Verschiebung in unterstromige Richtung der Verkleidung (17) den Verschluss der Kaltluftader (19) durch diese Klappen (23) und die Ableitung des Kaltluftstroms aus der Gondel bewirkt.

12. Flugzeuggondel, **dadurch gekennzeichnet, dass** sie mit einer Gruppe ausgestattet ist, die einem der vorangehenden Ansprüche entspricht.
